# EUROPEAN PATENT APPLICATION

(11) **EP 4 571 919 A1**
(43) Date of publication of application: **18.06.2025**
(21) Application number: 23872947.9
(22) Date of filing: 21.09.2023
(51) Int. Cl.: H01M 10/0567, H01M 10/52, H01M 4/505, H01M 4/525, H01M 10/052

(54) **NONAQUEOUS ELECTROLYTE AND LITHIUM SECONDARY BATTERY COMPRISING SAME**

(30) Priority: 30.09.2022 KR 20220125850
(71) Applicant: LG Energy Solution, Ltd., Seoul 07335 (KR)
(72) Inventor: KIM, Hyung Tae, Daejeon 34122 (KR); LEE, Chul Haeng, Daejeon 34122 (KR); CHOI, Young Cheol, Daejeon 34122 (KR); LEE, Bo Ram, Daejeon 34122 (KR); YEOM, Chul Eun, Daejeon 34122 (KR); SONG, Chang Ik, Daejeon 34122 (KR)
(74) Representative: Hoffmann Eitle
(86) International application number: PCT/KR2023/014388
(87) International publication number: WO 2024/071830

(57) **Abstract**

The present invention provides a non-aqueous electrolyte including a lithium salt, an organic solvent, and an additive, wherein the additive includes a compound represented by a specific formula. The non-aqueous electrolyte according to the present invention includes an additive which is excellent in electrode film protection and an O₂ scavenging effect, so that cycle properties and resistance properties of a lithium secondary battery including the non-aqueous electrolyte may be simultaneously improved.

## Description

### TECHNICAL FIELD

### Cross-reference to Related Applications

This application claims the benefit of Korean Patent Application No. 10-2022-0125850, filed on September 30, 2022, in the Korean Intellectual Property Office, the disclosure of which is incorporated herein in its entirety by reference.

### Technical Field

The present invention relates to a non-aqueous electrolyte and a lithium secondary battery including the same.

### BACKGROUND ART

Recently, as the application fields of lithium secondary batteries have rapidly expanded to electricity, electronics, communications, and the supply of power to electronic apparatuses such as computers, as well as the power storage and supply for large-area apparatuses such as automobiles and power storage devices, high-capacity, high-output, and high-stability secondary batteries are increasingly demanded.

Particularly, in lithium secondary batteries for automotive applications, the high capacity, high power, and long lifespan properties are becoming important. In order to achieve the high capacity of lithium secondary batteries, it is contemplated to drive the lithium secondary batteries under a high voltage.

However, when a lithium secondary battery is driven under the high voltage, films or electrode surface structures formed on the surfaces of positive/negative electrodes may be deteriorated due to a side reaction caused by the deterioration of an electrolyte while the battery is being charged and discharged, and thus transition metal ions may be eluted from the surface of the positive electrode. The transition metal ions eluted as described above are electro-deposited on the negative electrode and degrade the passivation capability of a solid electrolyte interface (SEI) film of the negative electrode, thereby causing a problem of deterioration of the negative electrode. The deterioration phenomenon of a secondary battery tends to accelerate when the potential of a positive electrode increases, or when the battery is exposed to high temperatures.

In addition, when a lithium secondary battery is driven under the high voltage, there is a problem in that active oxygen is dissociated from a positive electrode active material included in a positive electrode, and the active oxygen causes a side reaction with an organic solvent such as a cyclic carbonate to occur in a non-aqueous electrolyte, generates a gas such as CO or CO₂, and continuously degrades battery durability.

### DISCLOSURE OF THE INVENTION

### TECHNICAL PROBLEM

An aspect of the present invention provides a non-aqueous electrolyte which forms a stable film on positive/negative electrodes, thereby reducing electrolyte side reactions, has an excellent O₂ scavenging effect, and is effective in reducing the resistance of a secondary battery.

Another aspect of the present invention provides a lithium secondary battery which has reduced resistance and excellent lifespan performance by including the above-described non-aqueous electrolyte.

### TECHNICAL SOLUTION

According to an aspect of the present invention, there is provided a non-aqueous electrolyte including a lithium salt, an organic solvent, and an additive, wherein the additive includes a compound represented by Formula 1 below.

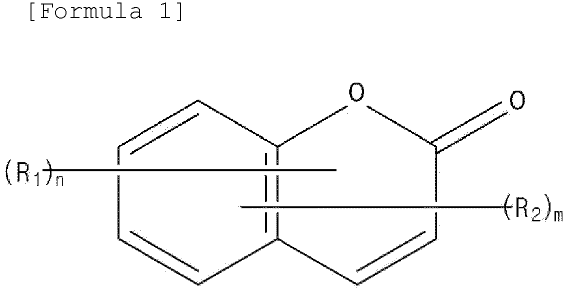

In Formula 1 above, R₁ is a substituent including halogen, a nitrile group, a propargyl group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and R₂ is a substituent represented by Formula 2 below, 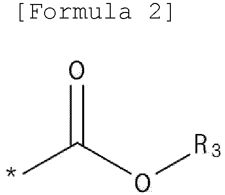 in Formula 2 above, R₃ is selected from an alkyl group having 1 to 10 carbon atoms and an alkenyl group having 1 to 10 carbon atoms, * is a bonding site, n is an integer of 0 to 5, m is an integer of 1 to 6, and n+m is an integer of 1 to 6.

According to an aspect of the present invention, there is provided a lithium secondary battery which includes a positive electrode including a positive electrode active material, a negative electrode including a negative electrode active material, a separator interposed between the positive electrode and the negative electrode, and the above-described non-aqueous electrolyte.

### ADVANTAGEOUS EFFECTS

A non-aqueous electrolyte of the present invention includes, as an additive, a coumarin-based compound in which a substituent containing an ester group is substituted. The additive makes it possible to form a film having excellent durability against positive/negative electrodes and reduced resistance, so that transition metal is suppressed from being eluted from a positive electrode and electrolyte side reactions in an electrode are suppressed. In addition, the non-aqueous electrolyte according to the present invention has an effect (O₂ Scavenging effect) of suppressing electrolyte decomposition and gas generation since a reactive oxygen compound generated from a positive electrode and a coumarin structure included in the compound represented by Formula 1 above are bonded.

Therefore, a lithium secondary battery including the above-described non-aqueous electrolyte may have both improved resistance properties and lifespan properties.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present specification, it should be understood that the terms "include," "comprise," or "have" are intended to specify the presence of stated features, numbers, steps, elements, or combinations thereof, but do not preclude the presence or addition of one or more other features, numbers, steps, elements, or combinations thereof.

Meanwhile, before describing the present invention, unless otherwise specified in the present invention, "*" refers to a connected portion (bonding site) between same or different atoms or end portions of formulas.

In addition, in the present specification, it will be understood that in the description of "a to b carbon atoms" herein, "a" and "b" each refer to the number of carbon atoms included in a specific functional group. That is, the functional group may include "a" to "b" carbon atoms. For example, an "alkyl group having 1 to 5 carbon atoms" refers to a C1-C5 alkyl group having 1 to 5 carbon atoms, that is, CH₃-, CH₃CH₂-, CH₃CH₂CH₂-, (CH₃)₂CH-, CH₃CH₂CH₂CH₂-, (CH₃)₂CHCH₂-, CH₃CH₂CH₂CH₂CH₂-, (CH₃)₂CHCH₂CH₂-, and the like.

In addition, in the present specification, an alkyl group, an alkenyl group, or an alkynyl group may all be substituted or unsubstituted. Unless otherwise defined, the term "substituted" means that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a cycloalkynyl group having 3 to 12 carbon atoms, a heterocycloalkyl group having 3 to 12 carbon atoms, a heterocycloalkenyl group having 3 to 12 carbon atoms, a heterocycloalkynyl group having 2 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, and a haloaryl group having 6 to 20 carbon atoms.

Hereinafter, the present invention will be described in more detail.

### Non-aqueous electrolyte

The present invention relates to a non-aqueous electrolyte. More specifically, the non-aqueous electrolyte may be a non-aqueous electrolyte for a lithium secondary battery.

The non-aqueous electrolyte according to the present invention includes a lithium salt, an organic solvent, and an additive, wherein the additive includes a compound represented by Formula 1 below.

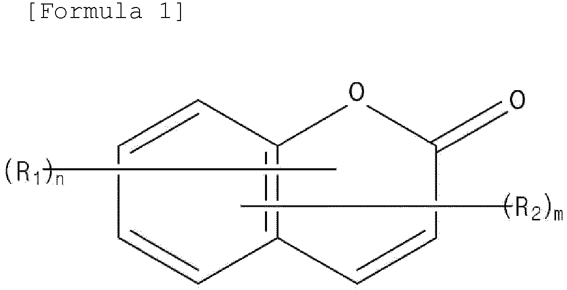

In Formula 1 above, R₁ is a substituent including halogen, a nitrile group, a propargyl group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and R₂ is a substituent represented by Formula 2 below, and 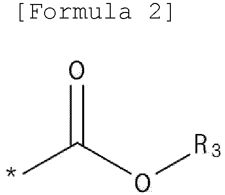 in Formula 2 above, R₃ is selected from among an alkyl group having 1 to 10 carbon atoms and an alkenyl group having 1 to 10 carbon atoms, * is a bonding site, n is an integer of 0 to 5, m is an integer of 1 to 6, and n+m is an integer of 1 to 6.

The non-aqueous electrolyte of the present invention includes, as an additive, a coumarin-based compound in which a substituent containing an ester group is substituted. The additive makes it possible to form a film having excellent durability against positive/negative electrodes and reduced resistance, so that transition metal is suppressed from being eluted from a positive electrode and electrolyte side reactions in an electrode are suppressed. In addition, the non-aqueous electrolyte according to the present invention has an effect (O₂ Scavenging effect) of suppressing electrolyte decomposition and gas generation since a reactive oxygen compound generated from a positive electrode and a coumarin structure included in the compound represented by Formula 1 above are bonded. Therefore, a lithium secondary battery including the above-described non-aqueous electrolyte may have both improved resistance properties and lifespan properties.

### (1) Lithium salt

As the lithium salt used in the present invention, various lithium salts commonly used in a non-aqueous electrolyte for a lithium secondary battery may be used without limitation. For example, the lithium salt may include Li⁺ as a cation, and may include, as an anion, at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻.

Specifically, the lithium salt may include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiB(C₂O₄)₂ (LiBOB), LiCF₃SO₃, LiN(SO₂F)₂ (LiFSI), LiCH₃SO₃, LiCF₃CO₂, LiCH₃CO₂, and LiN(SO₂CF₂CF₃)₂ (LiBETI). Specifically, the lithium salt may include at least one selected from the group consisting of LiBF₄, LiClO₄, LiPF₆, LiB(C₂O₄)₂ (LiBOB), LiCF₃SO₃, LiN(SO₂CF₃)₂ (LiTFSI), LiN(SO₂F)₂ (LiFSI), and LiN(SO₂CF₂CF₃)₂ (LiBETI).

In the non-aqueous electrolyte, the lithium salt may be included at a concentration of 0.5 M to 5 M, specifically 0.8 M to 4 M, and more specifically 0.8 M to 2.0 M. When the concentration of the lithium salt satisfies the above range, the Li⁺ transference number and the degree of dissociation of lithium ions are improved, so that output properties of the battery may be improved.

### (2) Organic solvent

The organic solvent is a non-aqueous solvent commonly used in a lithium secondary battery, and is not particularly limited as long as being capable of minimizing decomposition caused by an oxidation reaction and the like during charging and discharging of a secondary battery.

Specifically, the organic solvent may include at least one selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based solvent, a linear carbonate-based solvent, or a mixture thereof.

The cyclic carbonate-based organic solvent is a high-viscosity organic solvent having a high dielectric constant, and thus capable of readily dissociating a lithium salt in an electrolyte. Specifically, the cyclic carbonate-based organic solvent may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and more specifically, may include ethylene carbonate.

In addition, the linear carbonate-based organic solvent is an organic solvent having low viscosity and a low dielectric constant. Specifically, the linear carbonate-based organic solvent may include at least one selected from the group consisting of dimethyl carbonate (DMC), diethyl carbonate (DEC), dipropyl carbonate, ethylmethyl carbonate (EMC), methylpropyl carbonate, and ethylpropyl carbonate, and more specifically, may include ethylmethyl carbonate (EMC).

The organic solvent may be a mixture of a cyclic carbonate-based organic solvent and a linear carbonate-based organic solvent. At this time, the cyclic carbonate-based organic solvent and the linear carbonate-based organic solvent may be mixed at a volume ratio of 10:90 to 40:60, specifically, a volume ratio of 10:90 to 30:70, and more specifically, a volume ratio of 15:85 to 30:70. When the mixing ratio of a cyclic carbonate-based solvent and a linear carbonate-based solvent satisfies the above range, high-dielectric constant and low-viscosity properties are simultaneously satisfied, and excellent ion conductivity properties may be achieved.

In addition, in order to prepare an electrolyte having high ion conductivity, the organic solvent may include at least one carbonate-based organic solvent selected from the group consisting of the cyclic carbonate-based organic solvent and the linear carbonate-based organic solvent and may further include at least one ester-based organic solvent selected from the group consisting of a linear ester-based organic solvent and a cyclic ester-based organic solvent.

The linear ester-based organic solvent may specifically include at least one selected from the group consisting of methyl acetate, ethyl acetate, propyl acetate, methyl propionate, ethyl propionate, propyl propionate, and butyl propionate.

In addition, the cyclic ester-based organic solvent may include at least one selected from the group consisting of γ-butyrolactone, γ-valerolactone, γ-caprolactone, σ-valerolactone, and ε-caprolactone.

Meanwhile, if necessary, the organic solvent may additionally use any organic solvent commonly used in a non-aqueous electrolyte without limitation. For example, at least one organic solvent among an ether-based organic solvent, a glyme-based solvent, and a nitrile-based solvent may be additionally included.

As the ether-based solvent, any one selected from the group consisting of dimethyl ether, diethyl ether, dipropyl ether, methyl ethyl ether, methyl propyl ether, ethyl propyl ether, 1,3-dioxolane (DOL), and 2,2-bis (trifluoromethyl)-1,3-dioxolane (TFDOL), or a mixture of two or more thereof may be used, but the present invention is not limited thereto.

The glyme-based solvent is a solvent having a higher dielectric constant and lower surface tension than those of a linear carbonate-based organic solvent, and having less reactivity with a metal, and may include at least one selected from the group consisting of dimethoxyethane (glyme, DME), diethoxyethane, digylme, tri-glyme, and tetra-glyme (TEGDME), but is not limited thereto.

The nitrile-based solvent may be one or more selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

### (3) Additive

The non-aqueous electrolyte according to the present invention includes a compound represented by Formula 1 below.

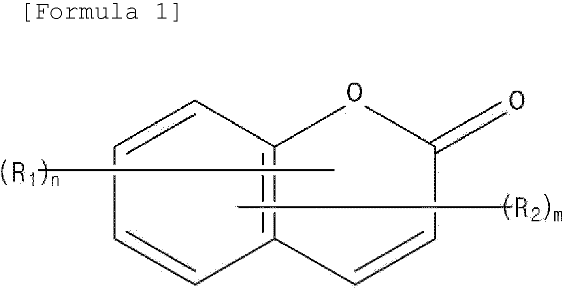

In Formula 1 above, R₁ is a substituent including halogen, a nitrile group, a propargyl group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and R₂ is a substituent represented by Formula 2 below, 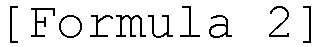 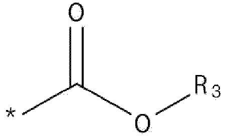 in Formula 2 above, R₃ is selected from an alkyl group having 1 to 10 carbon atoms and an alkenyl group having 1 to 10 carbon atoms, * is a bonding site, n is an integer of 0 to 5, m is an integer of 1 to 6, and n+m is an integer of 1 to 6. Meanwhile, when there is a plurality of R₁ in Formula 1, the plurality of R₁ may be the same as or different from each other. In addition, when there is a plurality of R₂ in Formula 1, the plurality of R₂ may be the same as or different from each other.

The compound represented by Formula 1 above is a coumarin-based compound including a substituent containing an ester group. A coumarin structure included in Formula 1 above has higher reaction energy with active oxygen than an organic solvent such as ethylene carbonate, and thus, is bonded to active oxygen earlier than the organic solvent during generation of the active oxygen. Therefore, when the compound of Formula 1 above is included in the non-aqueous electrolyte, a reactive oxygen compound generated from the positive electrode and the coumarin structure included in the compound represented by Formula 1 above are bonded, thereby exhibiting an effect of suppressing electrolyte decomposition and gas generation.

In addition, the compound represented by Formula 1 above may be rapidly reduced and decomposed at the time of initial activation and form a stable solid electrolyte interphase (SEI) film on the surface of a negative electrode. The coumarin structure included in the compound represented by Formula 1 above has strong reducibility at the negative electrode, and a ring structure is open at the time of initial activation of a lithium secondary battery, making it possible to form a polyethylene oxide-based polymer-type SEI layer. The polymer-type SEI layer has the advantage of being excellent in flexibility and resilience. In addition, the substituent (Formula 2) containing an ester group included in the compound represented by Formula 1 is desirable in light of assisting in the formation of an SEI film having reduced resistance, helping to improve lithium ion conductivity due to oxygen contained therein in formation of the SEI film, and promoting an SEI film formation reaction through the reduction in electron density of the substituent.

Therefore, a non-aqueous electrolyte which includes, as an additive, a compound of Formula 1 including both a coumarin structure and an ester-containing substituent may reduce resistance against a negative electrode and form an SEI film excellent in durability, thereby greatly improving the lifespan performance and resistance properties of a lithium secondary battery including the non-aqueous electrolyte.

Specifically, the compound represented by Formula 1 above may include at least one selected from the group consisting of compounds represented by Formula 1-A and Formula 1-B below, and more specifically, may include a compound represented by Formula 1-A.

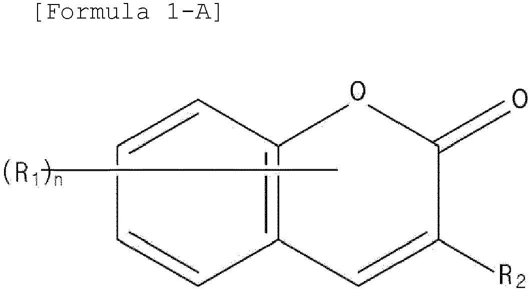

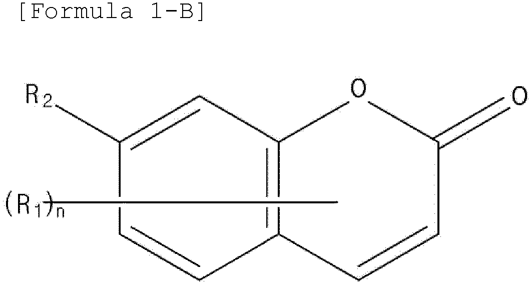

In Formula 1-A above and Formula 1-B above, R₁, R₂, and n are as defined in Formula 1.

If R₂ is substituted on coumarin as in Formula 1-A and Formula 1-B above, it is preferable in terms of promoting the SEI film formation reaction of the coumarin structure itself. Particularly, if R₂ is substituted on coumarin as in Formula 1-A above, the SEI film formation reaction may be further promoted.

More specifically, the compound represented by Formula 1 above may include at least one selected from the group consisting of compounds represented by Formula 1-a and Formula 1-b, and even more specifically, may include a compound represented by Formula 1-a below.

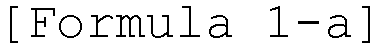

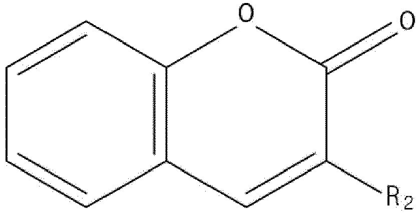

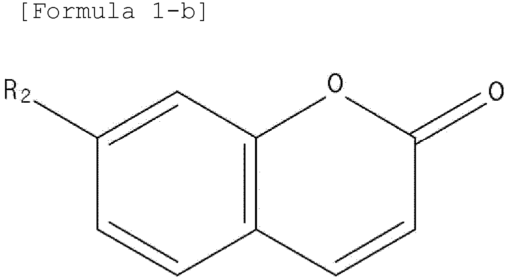

In Formula 1-a and Formula 1-b above, R₂ is as defined in Formula 1.

In Formula 2 above, R₃ is selected from among an alkyl group having 1 to 10 carbon atoms and an alkenyl group having 1 to 10 carbon atoms, and specifically, may be an alkyl group having 1 to 10 carbon atoms, and more specifically, may be an alkyl group having 1 to 3 carbon atoms.

In addition, the compound represented by Formula 1 above may include at least one selected from the group consisting of compounds represented by Formula 1-a-1 below, Formula 1-a-2 below, Formula 1-b-1 below, and Formula 1-b-2 below, and specifically, may include at least one selected from the group consisting of compounds represented by Formula 1-a-1 below and Formula 1-a-2 below, and more specifically, may include a compound represented by Formula 1-a-1 below.

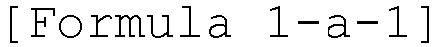

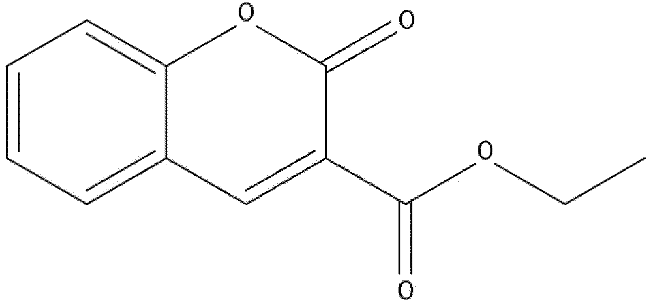

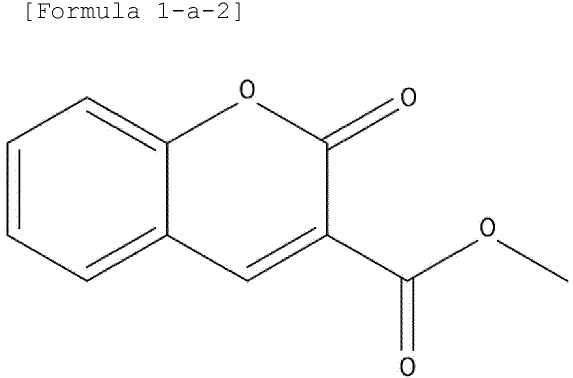

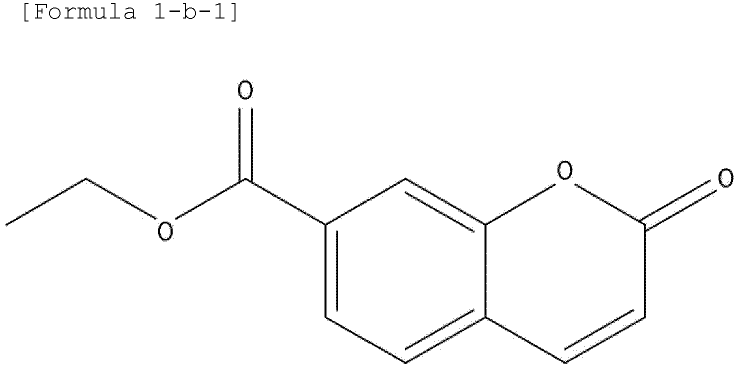

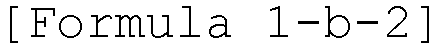

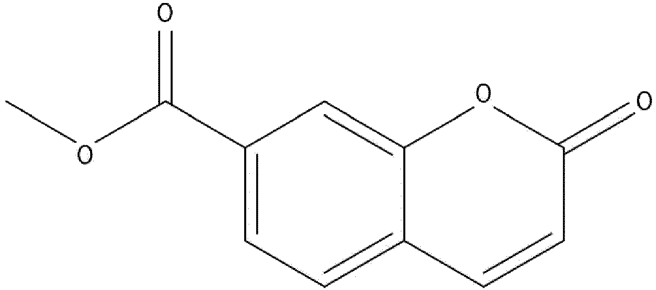

The compound represented by Formula 1 above may be included in an amount of 0.01 wt% to 5 wt%, specifically 0.05 wt% to 4.5 wt%, more specifically 0.2 wt% to 1.5 wt%, and even more specifically 0.4 wt% to 0.8 wt%, in the non-aqueous electrolyte. When the content of the compound represented by Formula 1 above satisfies the above range, it is preferable in terms of preventing an increase in resistance of a lithium secondary battery due to excessive addition and a resultant decrease in life performance while sufficiently exhibiting the aforementioned effect of protecting an electrode interface and the effect of suppressing organic solvent decomposition and preventing side reactions.

The additive may further include an additional additive together with the compound of Formula 1 above. In addition, the additional additive may be included in the non-aqueous electrolyte to prevent the non-aqueous electrolyte from decomposing in a high-output environment to cause collapse of a negative electrode, or to achieve low-temperature high-rate discharge properties, high-temperature stability, overcharge prevention, battery expansion suppression at high temperatures, and the like.

Specifically, the additional additive may be at least one selected from the group consisting of vinylene carbonate, vinyl ethylene carbonate, fluoroethylene carbonate, 1,3-propane sultone, propene sultone, succinonitrile, adiponitrile, ethylene sulfate, LiPO₂F₂, lithium difluorooxalatoborate (LiODFB), lithium bis-(oxalato)borate (LiBOB), 3-trimethoxysilanyl-propyl-N-aniline (TMSPa), and tris(trimethylsilyl)phosphite (TMSPi), and more specifically, may be at least one selected from the group consisting of vinylene carbonate and 1,3-propane sultone.

The additional additive may be included in an amount of 0.1 wt% to 15 wt% in the non-aqueous electrolyte.

### Lithium secondary battery

In addition, the present invention provides a lithium secondary battery including the above-described non-aqueous electrolyte.

Specifically, the lithium secondary battery includes a positive electrode including a positive electrode active material, a negative electrode including a negative electrode active material, a separator interposed between the positive electrode and the negative electrode, and the above-described non-aqueous electrolyte.

At this time, the lithium secondary battery of the present invention may be manufactured through a common method known in the art. For example, the lithium secondary battery of the present invention may be manufactured by forming an electrode assembly in which a positive electrode, a negative electrode, and a separator between the positive electrode and the negative electrode are sequentially stacked, followed by inserting the electrode assembly in a battery case, and then injecting the non-aqueous electrolyte according to the present invention thereto.

### (1) Positive electrode

The positive electrode includes a positive electrode active material.

The positive electrode may include a positive electrode current collector, and a positive electrode active material layer disposed on at least one surface of the positive electrode current collector. At this time, the positive electrode active material may be included in the positive electrode active material layer.

The positive electrode current collector is not particularly limited as long as having high conductivity without causing a chemical change in the battery. Specifically, the positive electrode current collector may include at least one selected from the group consisting of copper, stainless steel, aluminum, nickel, titanium, fired carbon, and an aluminum-cadmium alloy, and preferably aluminum.

The positive electrode current collector may typically have a thickness of 3 to 500 µm.

The positive electrode current collector may have fine irregularities formed on the surface thereof to improve the bonding force of the positive electrode active material. For example, the positive electrode current collector may be used in various forms such as a film, a sheet, a foil, a net, a porous body, a foam, and a non-woven body.

The positive electrode active material layer is disposed on at least one surface of the positive electrode current collector. Specifically, the positive electrode active material layer may be disposed on one surface or both surfaces of the positive electrode current collector.

The positive electrode active material layer may include a positive electrode active material.

The positive electrode active material is a compound capable of reversible intercalation and de-intercalation of lithium, and specifically, may include a lithium transition metal composite oxide including lithium and at least one transition metal selected from the group consisting of nickel, cobalt, manganese, and aluminum, and preferably a lithium transition metal composite oxide including lithium and a transition metal containing nickel, cobalt, and manganese.

For example, the lithium transition metal composite oxide may be a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y}Mn_{Y}O₂ (where 0<Y<1), LiMn_{2-z}Ni_{z}O₄ (where 0<Z<2), etc.), a lithium-nickel-cobalt-based oxide (e_{.}g_{.}, LiNi_{1-Y1}Co_{Y1}O₂ (where 0<Y1<1), etc.), a lithium-manganese-cobalt-based oxide (e.g., LiCo_{1-Y2}Mn_{Y2}O₂ (where 0<Y2<1), LiMn_{2-z1}Co_{z1}O₄ (where 0<Z1<2, etc.), a lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or a lithium-nickel-cobalt-transition metal (M) oxide (e.g., Li(Niₚ₂Co_{q2}Mnᵣ₃M_{S2})O₂ (where M is selected from the group consisting of Al, Fe, V, Cr, Ti, Ta, Mg, and Mo, and p2, q2, r3, and s2 are each an atomic fraction of independent elements, where 0<p2<1, 0<q2<1, 0<r3<1, 0<s2 <1, and p2+q2+r3+s2=1), etc.) and the like, and any one thereof or a compound of two or more thereof may be included. Among these, in terms of being able to increase the capacity and stability of a battery, the lithium transition metal composite oxide may be LiCoO₂, LiMnO₂, LiNiO₂, a lithium nickel-manganese-cobalt oxide (e.g., Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, etc.), or a lithium-nickel-cobalt-aluminum oxide (e.g., Li(Ni_{0.8}Co_{0.15}Al_{0.05})O₂, etc.), and the like. When considering a remarkable effect of improvement according to the control of types and content ratios of constituent elements forming a lithium transition metal composite oxide, the lithium transition metal composite oxide may be Li(Ni_{0.6}Mn_{0.2}CO_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and the like, and any one thereof or a mixture of two or more thereof may be used.

More specifically, the positive electrode active material is a lithium transition metal composite oxide, and may include in an amount of 60 mol% or greater of nickel with respect to the total number of moles of transition metals included in the lithium transition metal composite oxide. Specifically, the positive electrode active material is a lithium transition metal composite oxide, and the transition metal includes nickel, and at least one selected from manganese, cobalt, and aluminum, and may include the nickel in an amount of 60 mol% or greater, specifically 60 mol% to 90 mol%, with respect to the total number of moles of the transition metals. When the lithium transition metal composite oxide with a high content of nickel is used together with the above-described non-aqueous electrolyte solution, it is preferable in terms of reducing gaseous by-products generated due to structural collapse.

In addition, the positive electrode active material may include a lithium transition metal composite oxide represented by Formula 5 below.

[Formula 5] Li₁₊ₓ(NiₐCo_{b}Mn_{c}M_{d})O₂

In Formula 5 above, M is one or more selected from W, Cu, Fe, V, Cr, Ti, Zr, Zn, Al, In, Ta, Y, La, Sr, Ga, Sc, Gd, Sm, Ca, Ce, Nb, Mg, B, and Mo, and 1+x, a, b, c, and d are each an atomic fraction of an independent element, where 0≤x≤0.2, 0.50≤a<1, 0<b≤0.25, 0<c≤0.25, 0≤d≤0.1, and a+b+c+d=1.

Preferably, the a, b, c, and d may respectively be 0.70≤a≤0.95, 0.025≤b≤0.20, 0.025≤c≤0.20, and 0≤d≤0.05.

In addition, the a, b, c, and d may respectively be 0.80≤a≤0.95, 0.025≤b≤0.15, 0.025≤c≤0.15, and 0≤d≤0.05.

In addition, the a, b, c, and d may respectively be 0.85≤a≤0.90, 0.05≤b≤0.10, 0.05≤c≤0.10, and 0≤d≤0.03.

Meanwhile, the positive electrode active material may include a hyper-lithium manganese-rich oxide may include at least 50 mol% of Mn among all metals excluding lithium, and in which the molar ratio of lithium to transition metals is greater than 1.

When the hyper-lithium manganese-rich oxide is used as a positive electrode active material, active oxygen is generated while the hyper-lithium manganese-rich oxide of a rock salt phase is being decomposed during an initial activation process. The active oxygen attacks and decomposes an organic solvent such as ethylene carbonate, and generates gases and resistor by-products, thereby degrading battery physical properties. However, in the present invention, since the non-aqueous electrolyte includes a compound having higher reactivity with active oxygen than an organic solvent, the active oxygen generated in the initial activation process may be first bonded to the compound represented by Formula 1 above earlier than the organic solvent, thereby minimizing side effects caused by decomposition of the organic solvent.

The hyper-lithium manganese-rich oxide may be a compound represented by Formula 6 below.

[Formula 6] Li₁₊ₛ[NiₜCoᵤMnᵥM¹_{w}]O_{2+z}

In Formula 6 above, M¹ is one or more elements selected from W, Cu, Fe, V, Cr, Ti, Zr, Zn, Al, In, Ta, Y, La, Sr, Ga, Sc, Gd, Sm, Ca, Ce, Nb, Mg, B and Mo. In addition, in Formula 6 above, it may be that 0.05≤s≤1, 0≤t≤0.5, 0≤u≤0.3, 0.5≤v<1.0, 0≤w≤0.2, and 0≤z≤1, preferably that 0.05≤s≤1, 0≤t≤0.5, 0≤u≤0.1, 0.5≤v<1.0, 0≤w≤0.2, and 0≤z≤1, and more preferably that 0.10≤s≤0.50, 0.1≤t≤0.5, 0≤u≤0.1, 0.65v<1.0, 0≤w≤0.1, and 0≤z≤0.50.

More specifically, the hyper-lithium manganese-rich oxide may be a compound represented by Formula 6-1 below.

[Formula 6-1] X Li₂MnO₃ ·(1-X)Li[Ni_{1-y-z-w}Mn_{y}Co_{z}M¹_{w}]O₂

In Formula 6-1 above, M¹ is one or more elements selected from W, Cu, Fe, V, Cr, Ti, Zr, Zn, Al, In, Ta, Y, La, Sr, Ga, Sc, Gd, Sm, Ca, Ce, Nb, Mg, B and Mo. In addition, in Formula 6-1 above, it may be that 0.1≤X≤0.5, 0.5≤y<1, 0≤z≤0.3, and 0≤w≤0.2, preferably that 0.2≤X≤0.5, 0.5≤y<1, 0≤z≤0.1, and 0≤w≤0.2, and more preferably that 0.3≤X≤0.5, 0.6≤y<1, 0≤z≤0.1, and 0≤w≤0.2.

The positive electrode active material may be included in the positive electrode active material layer in an amount of 80 wt% to 99 wt%, preferably 92 wt% to 98.5 wt%, in consideration of exerting sufficient capacity of the positive electrode active material.

The positive electrode active material layer may further include a binder and/or a conductive material together with the above-described positive electrode active material.

The binder is a component for assisting in binding of an active material, a conductive material, and the like, and binding to a current collector. Specifically, the binder may include at least one selected from the group consisting of a polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber, and fluorine rubber, and include preferably polyvinylidene fluoride.

The binder may be included in the positive electrode active material layer in an amount of 1 wt% to 20 wt%, preferably 1.2 wt% to 10 wt%, in terms of securing sufficient binding force between components such as a positive electrode active material.

The conductive material may be used to assist and improve conductivity in the secondary battery, and is not particularly limited as long as having conductivity without causing a chemical change. Specifically, the positive electrode conductive material may include: graphite such as natural graphite or artificial graphite; a carbon-based material such as carbon black, acetylene black, Ketjen black, channel black, furnace black, lamp black, and thermal black; conductive fiber such as carbon fiber and metal fiber; a conductive tube such as a carbon nanotube; fluorocarbon; metal powder such as aluminum powder, and nickel powder; a conductive whisker such as zinc oxide and potassium titanate; a conductive metal oxide such as titanium oxide; and a polyphenylene derivative, and may preferably include carbon black in terms of improving conductivity.

In terms of securing sufficient electrical conductivity, the conductive material may be included in the positive electrode active material layer in an amount of 1 wt% to 20 wt%, preferably 1.2 wt% to 10 wt%.

The thickness of the positive electrode active material layer may be 30 µm to 400 µm, preferably 40 µm to 110 µm.

The positive electrode may be manufactured by coating the positive electrode current collector with a positive electrode slurry including a positive electrode active material, and optionally, a binder, a conductive material, and a solvent for forming a positive electrode slurry, and then drying and rolling the resultant.

The solvent for forming a positive electrode slurry may include an organic solvent such as N-methyl-2-pyrrolidone (NMP). The solid content of the positive electrode slurry may be 40 wt% to 90 wt%, specifically 50 wt% to 80 wt%.

### (2) Negative electrode

The negative electrode may oppose the positive electrode.

The negative electrode includes a negative electrode active material.

The negative electrode may include a negative electrode current collector, and a negative electrode active material layer disposed on at least one surface of the negative electrode current collector. At this time, the negative electrode active material may be included in the negative electrode active material layer.

The negative electrode current collector is not particularly limited as long as having conductivity without causing a chemical change in the battery. Specifically, copper, stainless steel, aluminum, nickel, titanium, fired carbon, copper or stainless steel that is surface-treated with one of carbon, nickel, titanium, silver, and the like, an aluminum-cadmium alloy, and the like may be used as the negative electrode current collector.

The negative electrode current collector may typically have a thickness of 3 to 500 µm.

The negative electrode current collector may have fine irregularities formed on the surface thereof to improve the bonding force of the negative electrode active material. For example, the negative electrode current collector may be used in various forms such as a film, a sheet, a foil, a net, a porous body, a foam, and a non-woven body.

The negative electrode active material layer is disposed on at least one surface of the negative electrode current collector. Specifically, the negative electrode active material layer may be disposed on one surface or both surfaces of the negative electrode current collector.

The negative electrode active material layer may include a negative electrode active material.

The negative electrode active material is a material capable of reversibly intercalating/de-intercalating lithium ions, and may include at least one selected from the group consisting of a carbon-based active material, a (semi-)metal-based active material, and a lithium metal, and specifically, may include at least one selected from a carbon-based active material and a (semi-)metal-based active material.

The carbon-based active material may include at least one selected from the group consisting of artificial graphite, natural graphite, hard carbon, soft carbon, carbon black, graphene, and fibrous carbon, and may preferably include at least one selected from the group consisting of artificial graphite and natural graphite.

The average particle diameter (D₅₀) of the carbon-based active material may be 10 µm to 30 µm, preferably 15 µm to 25 µm, in terms of ensuring structural stability during charge/discharge and decreasing side reactions with an electrolyte solution.

Specifically, the (semi-)metal-based active material may include at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn, an alloy of lithium and at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn, an oxide of at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn, lithium titanium oxide (LTO), lithium vanadium oxide, and the like.

More specifically, the (semi-)metal-based active material may include a silicon-based active material.

The silicon-based active material may include a compound represented by SiOₓ(0≤x<2). Since SiO₂ does not react with lithium ions, thereby not being able to store lithium, it is preferable that x is in the above range, and more preferably, the silicon-based active material may be SiO.

The average particle diameter (D₅₀) of the silicon-based active material may be 1 µm to 30 µm, preferably 2 µm to 15 µm, in terms of ensuring structural stability during charge/discharge and decreasing side reactions with an electrolyte solution.

The negative electrode active material may be included in an amount of 60 wt% to 99 wt%, preferably 75 wt to 95 wt% in the negative electrode active material layer.

The negative electrode active material layer may further include a binder and/or a conductive material together with the negative electrode active material.

At this time, the binder is used to improve battery performance by improving adhesion between the negative electrode active material layer and the negative electrode current collector, and may include, for example, at least any one selected from the group consisting of polyvinylidenefluoride-hexafluoropropylene copolymer (PVDF-co-HFP), polyvinylidenefluoride (PVDF), polyacrylonitrile, polymethylmethacrylate, polyvinylalcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluorine rubber, and a material having a hydrogen thereof substituted with Li, Na, Ca, or the like, and may also include various copolymers thereof.

The binder may be included in an amount of 0.5 wt% to 10 wt%, preferably 1 wt% to 5 wt%, in the negative electrode active material layer.

The conductive material is not particularly limited as long as having conductivity without causing a chemical change in the battery, and for example, graphite such as natural graphite or artificial graphite; a carbon-based material such as carbon black, acetylene black, Ketjen black, channel black, furnace black, lamp black, and thermal black; conductive fiber such as carbon fiber and metal fiber; a conductive tube such as a carbon nanotube; fluorocarbon; metal powder such as aluminum powder, and nickel powder; a conductive whisker such as zinc oxide and potassium titanate; a conductive metal oxide such as titanium oxide; a conductive material such as a polyphenylene derivative, and the like may be used.

The conductive material may be included in an amount of 0.5 wt% to 10 wt%, preferably 1 wt% to 5 wt%, in the negative electrode active material layer.

The thickness of the negative electrode active material layer may be 10 µm to 100 µm, preferably 50 µm to 80 µm.

The negative electrode may be manufactured by coating at least one surface of a negative electrode current collector with a negative electrode slurry including a negative electrode active material, a binder, a conductive material, and/or a solvent for forming a negative electrode slurry, and then drying and rolling the resultant.

The solvent for forming a negative electrode slurry may include, for example, at least one selected from the group consisting of distilled water, N-methyl-2-pyrrolidone (NMP), ethanol, methanol, and isopropyl alcohol, preferably distilled water, in terms of facilitating the dispersion of the negative electrode active material, the binder, and/or the conductive material. The solid content of the negative electrode slurry may be 30 wt% to 80 wt%, specifically 40 wt% to 70 wt%.

### (3) Separator

In addition, as the separator, a common porous polymer film typically used as a separator, for example, a porous polymer film made of a polyolefin-based polymer, such as an ethylene homocopolymer, a propylene homocopolymer, an ethylene/butene copolymer, an ethylene/hexene copolymer, and an ethylene/methacrylate copolymer may be used alone, or a laminate thereof may be used. Alternatively, a common porous non-woven fabric, for example, a non-woven fabric made of glass fiber having a high melting point or polyethylene terephthalate fiber may be used, but the present invention is not limited thereto. Also, a coated separator including a ceramic component or a polymer material may be used to secure heat resistance or mechanical strength, and may be selectively used in a single-layered or a multi-layered structure.

The external shape of the lithium secondary battery of the present invention is not particularly limited, but may be a cylindrical shape using a can, a square shape, a pouch shape, a coin shape, or the like.

Hereinafter, the present invention will be described in more detail with reference to specific examples. However, the following examples are for illustrative purposes only to facilitate the understanding of the present invention, and do not limit the scope of the present invention. It will be apparent to those skilled in the art that various changes and modifications can be made without departing from the scope and spirit of the invention, and it is obvious that such variations and modifications are within the scope of the appended claims.

### Examples and Comparative Examples

### Example 1

### (Preparation of non-aqueous electrolyte)

As an organic solvent, a mixture in which ethylene carbonate (EC) and ethyl methylcarbonate (EMC) were mixed at a volume ratio of 30:70 was used.

To the organic solvent, LiPF₆ as a lithium salt, a compound represented by Formula 1-a-1 below, and vinylene carbonate and 1,3-propane sultone as additional additives were added to prepare a non-aqueous electrolyte.

The LiPF₆ was included at a concentration of 1.0 M in the non-aqueous electrolyte.

The compound represented by Formula 1-a-1 below was included in an amount of 0.5 wt% in the non-aqueous electrolyte.

In addition, the non-aqueous electrolyte included vinylene carbonate and 1,3-propanesultone in an amount of 0.5 wt% each.

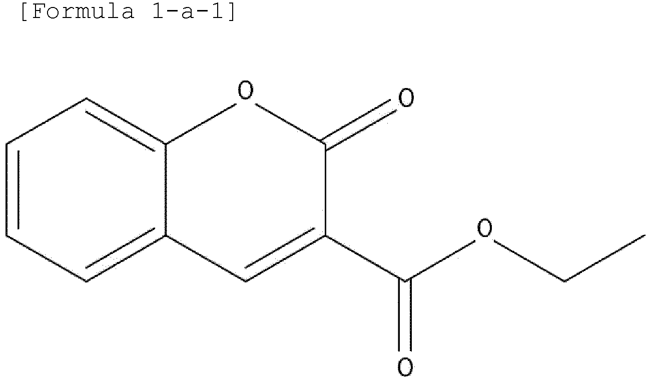

### (Manufacturing of lithium secondary battery)

A positive electrode active material (Li_{1.35}[Ni_{0.35}Mn_{0.65}]O₂, a hyper-lithium manganese-rich oxide), a conductive material (carbon black), and a binder (polyvinylidene fluoride) were added at a weight ratio of 96.0:1.5:2.5 to N-methyl-2-pyrrolidone (NMP), which is a solvent, to prepare a positive electrode slurry (solid content of 60 wt%). The positive electrode slurry was applied on one surface of a positive electrode current collector (Al thin film) having a thickness of 13.5 µm, and then dried and roll-pressed to manufacture a positive electrode.

A negative electrode active material (graphite), a conductive material (carbon black), and a binder (styrene-butadiene rubber) were added at a weight ratio of 97:1:2 to distilled water, which is a solvent, to prepare a negative electrode slurry (solid content of 60 wt%). The negative electrode slurry was applied on one surface of a negative electrode current collector (Cu thin film) having a thickness of 6 µm, and then dried and roll-pressed to manufacture a negative electrode.

In a dry room, a polyethylene porous film separator was interposed between the positive electrode and the negative electrode manufactured above, and then the prepared non-aqueous electrolyte was injected thereto to manufacture a secondary battery.

### Example 2

A non-aqueous electrolyte and a secondary battery were manufactured in the same manner as in Example 1, except that 0.3 wt% of the compound represented by Formula 1-a-1 above was added to the non-aqueous electrolyte in Example 1.

### Example 3

A non-aqueous electrolyte and a secondary battery were manufactured in the same manner as in Example 1, except that 1.0 wt% of the compound represented by Formula 1-a-1 above was added to the non-aqueous electrolyte in Example 1.

### Comparative Example 1

A non-aqueous electrolyte and a secondary battery were manufactured in the same manner as in Example 1, except that the compound represented by Formula 1-a-1 above was not added.

### Comparative Example 2

A non-aqueous electrolyte and a secondary battery were manufactured in the same manner as in Example 1, except that a compound represented by Formula X below was added, instead of the compound represented by Formula 1-a-1 above, in an amount of 0.5 wt% to the non-aqueous electrolyte.

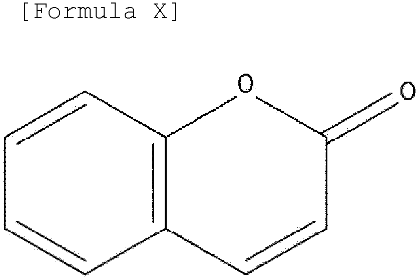

### Experimental Examples

### Experimental Example 1: Cycle capacity retention rate evaluation

The lithium secondary batteries of Examples 1 to 3 and Comparative Examples 1 and 2 manufactured above were charged to 4.35 V and 1/40 C under the conditions of CC/CV and 0.33 C at 45 °C using an electrochemical charge/discharge device, and then discharged to 2.0 V under the conditions of CC and 0.33 C, which was set to one cycle, and 150 cycles of the charge/discharge were performed to measure a capacity retention rate.

The capacity retention rate was calculated by the following equation, and the results are shown in Table 1 below.

Capacity retention rate (%) = {(Discharge capacity after 150 cycles / Discharge capacity after 1 cycle)} × 100

### Experimental Example 2: Resistance evaluation

The lithium secondary batteries of Examples 1 to 3 and Comparative Examples 1 and 2 manufactured above were charged to 4.35 V and 1/40 C under the conditions of CC/CV and 0.33 C at 45 °C, and then discharged to 2.0 V under the conditions of CC and 0.33 C, which was set to one cycle, and 150 cycles of the charge/discharge were performed.

After one cycle of the charge/discharge, the discharge capacity after 1 cycle was measured using an electrochemical charge/discharge device, the SOC was adjusted to SOC 50%, and then a pulse of 2.5 C was applied for 10 seconds to calculate the initial resistance through the difference between the voltage before the pulse application and the voltage after the application.

After 150 cycles of the charge/discharge, the resistance after 150 cycles was calculated by the same method as the above method. The results are shown in Table 1 below.

**[Table 1]**

| | Experimental Example 1 | Experimental Example 2 | |
|---|---|---|---|
| | Capacity retention rate (%, @150-th cycle) | Initial resistance (mΩ) | Resistance after 150 cycles (mΩ) |
| Example 1 | 83.8 | 0.81 | 1.93 |
| Example 2 | 82.5 | 0.80 | 2.01 |
| Example 3 | 82.7 | 0.84 | 2.05 |
| Comparative Example 1 | 79.0 | 0.92 | 2.42 |
| Comparative Example 2 | 81.0 | 0.80 | 1.93 |

Referring to Table 1, it can be confirmed that the lithium secondary batteries of Examples 1 to 3 using the non-aqueous electrolyte including the compound represented by Formula 1 simultaneously improve cycle-lifespan performance and resistance properties compared to the lithium secondary batteries of Comparative Examples 1 and 2.

### Experimental Example 3: Metal elution amount evaluation

Charging the secondary batteries of Example 1, Comparative Example 1, and Comparative Example 2 to 4.35 V and 1/40 C under the conditions of CC/CV and 0.33 C at 45 °C, and then discharging the same to 2.0 V under the conditions of CC and 0.33 C was set to one cycle, and 150 cycles of the charge/discharge were performed.

Thereafter, an inductively coupled plasma optical emission spectrophotometer (ICP-OES) was used to measure the concentration of all metals eluted in the electrolyte solution. The amounts of metals measured using ICP analysis are shown in Table 2 below.

**[Table 2]**

| | Experimental Example 3 |
|---|---|
| | Metal elution amount (mg/kg, @150-th cycle) |
| Example 1 | 435 |
| Comparative Example 1 | 540 |
| Comparative Example 2 | 525 |

Referring to Table 2, it can be confirmed that the secondary battery using the non-aqueous electrolyte solution of Example 1 significantly reduces the amount of metal elution during cycle charge and discharge compared to the secondary batteries of Comparative Example 1 and Comparative Example 2.

## Claims

1. A non-aqueous electrolyte comprising:
a lithium salt;
an organic solvent; and
an additive,
wherein the additive includes a compound represented by Formula 1 below: 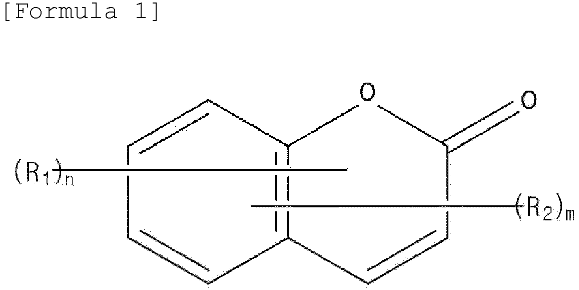
wherein in Formula 1 above, R₁ is a substituent including halogen, a nitrile group, a propargyl group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and
R₂ is a substituent represented by Formula 2 below, 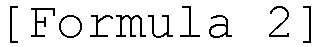 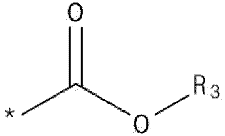
wherein in Formula 2 above, R₃ is selected from among an alkyl group having 1 to 10 carbon atoms and an alkenyl group having 1 to 10 carbon atoms, * is a bonding site,
n is an integer of 0 to 5, m is an integer of 1 to 6, and n+m is an integer of 1 to 6.

2. The non-aqueous electrolyte of claim 1, wherein the compound represented by Formula 1 above comprises at least one selected from the group consisting of a compound represented by Formula 1-A and a compound represented by Formula 1-B: 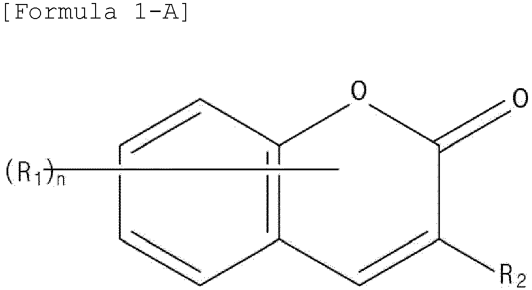 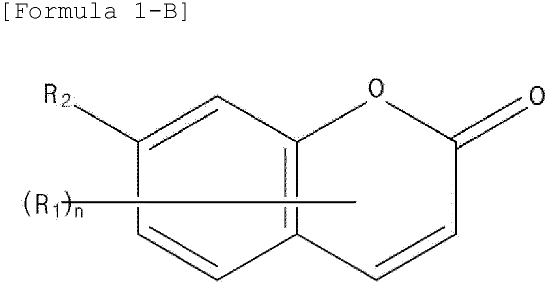 wherein in Formula 1-A above and Formula 1-B above, R₁, R₂, and n are as defined in Formula 1.

3. The non-aqueous electrolyte of claim 1, wherein the compound represented by Formula 1 above comprises at least one selected from the group consisting of a compound represented by Formula 1-a and a compound represented by Formula 1-b: 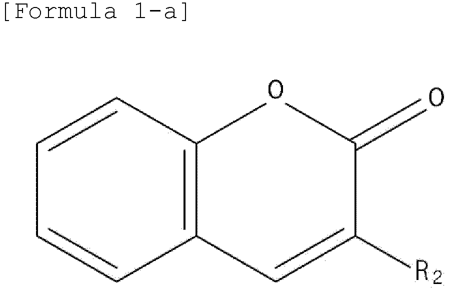 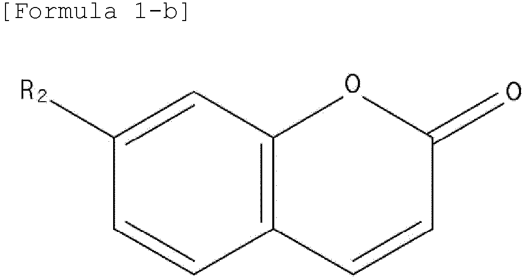 wherein in Formula 1-a and Formula 1-b above, R₂ is as defined in Formula 1.

4. The non-aqueous electrolyte of claim 1, wherein the compound represented by Formula 1 above comprises at least one selected from the group consisting of compounds represented by Formula 1-a-1 below, Formula 1-a-2 below, Formula 1-b-1 below, and Formula 1-b-2 below:

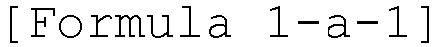

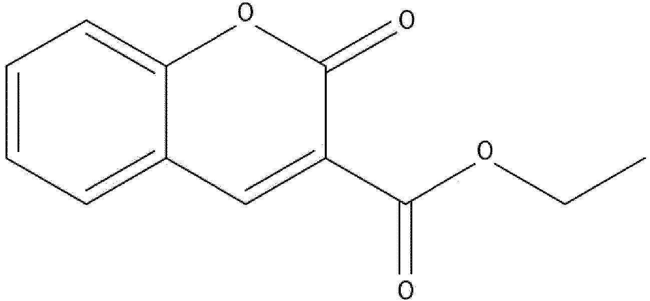

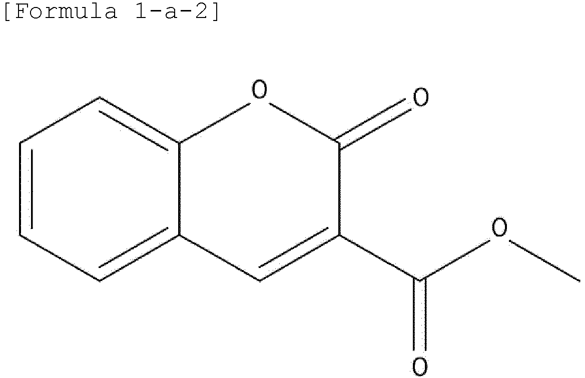

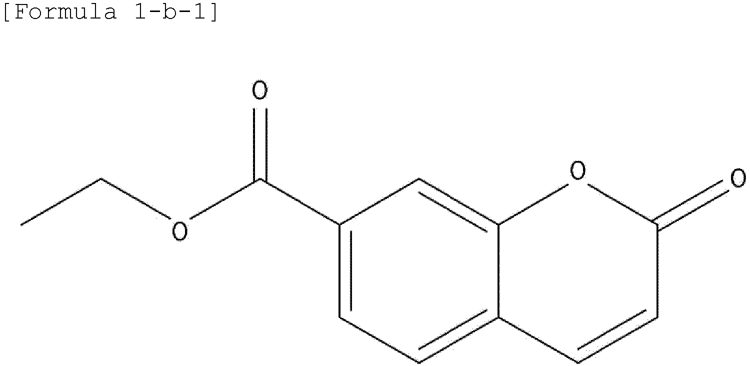

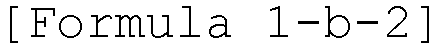

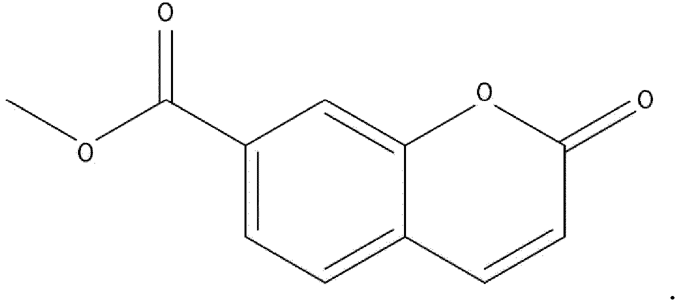

5. The non-aqueous electrolyte of claim 1, wherein the compound represented by Formula 1 above is included in an amount of 0.01 wt% to 10 wt% in the non-aqueous electrolyte.

6. The non-aqueous electrolyte of claim 1, wherein the lithium salt comprises at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiB(C₂O₄)₂ (LiBOB), LiCF₃SO₃, LiN(SO₂F)₂ (LiFSI), LiCH₃SO₃, LiCF₃CO₂, LiCH₃CO₂, and LiN(SO₂CF₂CF₃)₂ (LiBETI).

7. The non-aqueous electrolyte of claim 1, wherein the lithium salt is included at a molar concentration of 0.5 M to 5.0 M in the non-aqueous electrolyte.

8. The non-aqueous electrolyte of claim 1, wherein the organic solvent comprises at least one selected from the group consisting of a cyclic carbonate-based organic solvent, a linear carbonate-based organic solvent, a linear ester-based organic solvent, and a cyclic ester-based organic solvent.

9. The non-aqueous electrolyte of claim 1, wherein the additive further comprises at least one additional additive selected from the group consisting of vinylene carbonate, vinylethylene carbonate, fluoroethylene carbonate, propane sultone, propene sultone, succinonitrile, adiponitrile, ethylene sulfate, LiPO₂F₂, lithium difluorooxalatoborate (LiODFB), lithium bis-(oxalato)borate (LiBOB), 3-trimethoxysilanyl-propyl-N-aniline (TMSPa), and tris(trimethylsilyl)phosphite (TMSPi).

10. A lithium secondary battery comprising:
a positive electrode including a positive electrode active material;
a negative electrode including a negative electrode active material;
a separator interposed between the positive electrode and the negative electrode; and
the non-aqueous electrolyte according to claim 1.

11. The lithium secondary battery of claim 10, wherein the positive electrode active material comprises a hyper-lithium manganese-rich oxide, which comprises at least 50 mol% of Mn among all metals excluding lithium, and in which the molar ratio of lithium to transition metals is greater than 1.

12. The lithium secondary battery of claim 11, wherein the hyper-lithium manganese-rich oxide is a compound represented by Formula 6 below:
[Formula 6] Li₁₊ₛ[NiₜCoᵤMnᵥM¹_{w}]O_{2+z}
wherein in Formula 6 above, M¹ is one or more selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and 0.05≤s≤1, 0≤t≤0.5, 0≤u≤0.3, 0.5≤v<1.0, 0≤w≤0.2, and 0≤z≤1.
